# EUROPEAN PATENT SPECIFICATION

(11) **EP 3 785 947 B1**
(45) Date of publication and mention of the grant of the patent: **04.10.2023**
(21) Application number: 20192652.4
(22) Date of filing: 25.08.2020
(51) Int. Cl.: B60C 15/00, B60C 15/05, B60C 15/04

(54) **TIRE WITH CLAMPED CARCASS PLY**
REIFEN MIT EINGESPANNTER KARKASSENLAGE
PNEUMATIQUE DOTÉ D'UN PLI DE CARCASSE SERRÉ

(30) Priority: 29.08.2019 US 201962893639 P; 03.08.2020 US 202016945959
(43) Date of publication of application: 03.03.2021
(73) Proprietor: The Goodyear Tire & Rubber Company, Akron, OH 44316 (US)
(72) Inventor: REICHLING, Gilles, 9189 Vichten (LU); BONNET, Gilles, 9176 Niederfeulen (LU); MULLER, Philippe Joseph Auguste, 6971 Champlon (BE); LIONETTI, Robert Edward, 7227 Bereldange (LU); DI PRIZIO, Olivier, 57330 Hettange-Grande (FR); SOULTIS, Nicolas, 6700 (BE); MARECHAL, Frederic Marie Bernard, 6781 Selange (BE)
(74) Representative: Kutsch, Bernd

(56) References cited:
- EP-A1- 0 467 277
- EP-A1- 0 518 098
- WO-A1-2004/065141
- JP-A- H06 156 022
- JP-A- 2008 230 278
- US-A1- 2011 143 160

## Description

### Field of the Invention

The invention relates generally to tires and more particularly to a pneumatic tire.

### Background of the Invention

For high performance and ultra-high performance tires, it is often desired to eliminate the ply turnup around the bead. Eliminating the ply turnup removes the stress concentration and improves the ply line in the lower area of the tire. Further, if the bead has no ply turnup, there is increased design flexibility for tire/rim interface improvement. However, it is difficult to build the tire without building the tire on a solid core. The ply cord typically pulls out from the bead during the tire curing process, because of the rapid expansion of the tire carcass during the cure process. The solid core eliminates the movement of the carcass. However, building a tire on a solid core requires special equipment and often is a much slower tire building process. Thus, it is desired to provide a tire that has no ply turnup using conventional tire building equipment.

JP-H06-156022 A describes a tire in accordance with the preamble of claim 1.

EP 0 467 277 A1 discloses a bead construction of a pneumatic radial tire, the tire comprising a carcass ply turn-up and concentric wire rings placed about the end of the carcass ply sandwiching the end therebetween.

WO2004065141 A1 discloses a bead construction of a pneumatic radial tire with multiple carcass plies each lacking a turn-up portion.

### Summary of the Invention

The invention relates to a tire in accordance with claim 1 and to a method in accordance with claim 10.

Dependent claims refer to preferred embodiments of the invention.

In one aspect of the invention, a tire having no ply turnup is provided, the tire comprising a tread, a single layer of ply, and a first triangular shaped bead, wherein the radially inner end of the single layer of ply is secured between the first bead and a second bead, wherein the second bead is formed by spirally winding a strip of reinforcements onto the radially inner end of the ply, wherein the strip is formed of two or more parallel reinforcements.

The carcass ply has no ply turnup.

The first bead portion is on the axially inner side of the carcass ply and the second bead portion is on the axially outer side of the carcass ply

In another aspect of the invention, a method of manufacturing a tire is provided, the tire comprising a tread, a carcass ply, a first bead portion which is triangular shaped or at least substantially triangular shaped, and a second bead portion, the radially inner portion or end of the carcass ply being secured between the first bead portion and the second bead portion, wherein the second bead portion is formed by spirally winding a strip onto the radially inner end of the carcass ply, the strip being formed of two or more parallel reinforcements.

Preferably, the second bead portion is formed from at least two strip windings, preferably three of four strip windings.

### Definitions

"Axial" and "axially" means lines or directions that are parallel to the axis of rotation of the tire.

"Chafer" is a narrow strip of material placed around the outside of a tire bead to protect the cord plies from wearing and cutting against the rim and distribute the flexing above the rim.

"Circumferential" means lines or directions extending along the perimeter of the surface of the annular tread perpendicular to the axial direction.

"Equatorial Centerplane (CP)" means the plane perpendicular to the tire's axis of rotation and passing through the center of the tread.

"Lateral" means an axial direction.

"Radial" and "radially" means directions radially toward or away from the axis of rotation of the tire.

"Tangent delta", or "tan delta," is a ratio of the shear loss modulus, also known as G", to the shear storage modulus (G'). These properties, namely the G', G" and tan delta, characterize the viscoelastic response of a rubber test sample to a tensile deformation at a fixed frequency and temperature, measured at 100°C.

### Brief Description of the Drawings

The invention will be described by way of example and with reference to the accompanying drawings in which:
Figure 1 is a cross-sectional view of a tire with no bead turnup; and
Figure 2 is a close-up view of the bead area of the tire of Figure 1.

### Detailed Description of Example Embodiments of the Present Invention

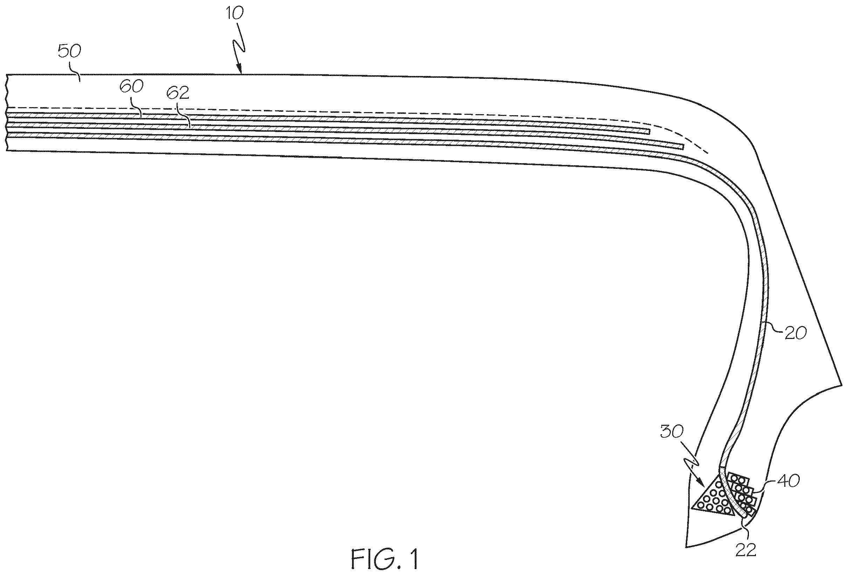

Figure 1 illustrates a tire 10 of the present invention that has no ply turnup around the bead. The tire 10 further includes a tread 50 and may include one or more belts 60, 62. The belts 60, 62 may comprise conventional belt configurations known to those skilled in the art.

The tire 10 preferably has a single layer or monolayer of ply 20, that has a radially inner portion 22 that is clamped between a first bead portion 30 and a second bead portion 40.

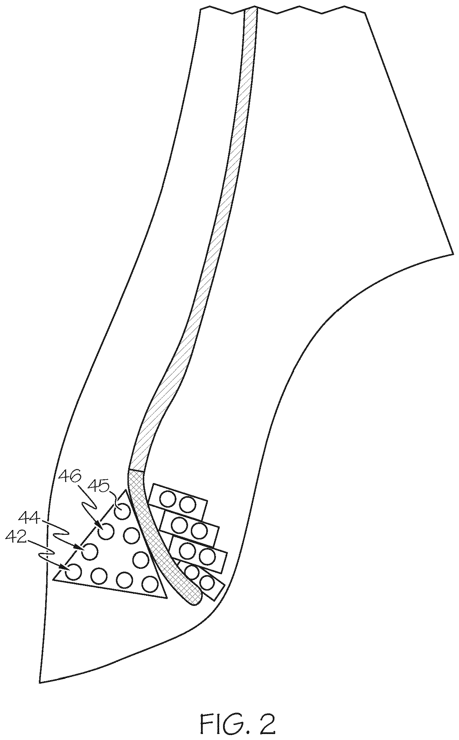

In one embodiment, the layer of ply ends radially inward of the radially innermost point of the first and second bead portion 30, 40. In another embodiment, the layer of ply 20 ends at a radial position or about a radial position that corresponds to the radial position the radial innermost point of the first and second bead portion 30, 40 (see Fig. 2).

In another embodiment, the layer of ply 20 ends radially between the radial outer innermost point of the first and second bead portion 30, 40 and the radial outer innermost point of the first and second bead portion 30, 40.

In one embodiment, the ply layer 20 comprises radial cords that may preferably be formed of high modulus 2200/3 denier cords or 3340/2 denier cords. The cord material may be nylon, aramid, or a hybrid construction of nylon/aramid. The lower ply end 22 is clamped between the first bead portion 30 and the second bead portion 40.

The first bead portion 30 is (in cross-section) a triangular shaped bead portion or an at least substantially triangular shaped bead portion.

Preferably, the triangular shaped bead portion 30 has at least three rows of wires, and more preferably four or five rows of wires.

The radially innermost row 42 typically has at least four reinforcement wires such as four (preferred), five or six wires.

The adjacent third row 44 has less reinforcement wires than radially innermost row 42 such as one less wire, for instance three wires.

The second row 46 has less wires than the third row 44 such as one less wire, for instance two wires.

The first row 48 or radially outermost row has less wires than the third 44, preferably only a single wire.

The reinforcement wire of rows one through four 42, 44, 46, 48 are preferably the same size.

The reinforcement wire of the first bead portion 30 is preferably a 1.3 mm metal wire or a wire with a diameter ranging from 0.8 to 1.5 mm. Preferably, the wire is steel wire.

Preferably, the metal wires of the first bead portion 30 have a minimum elongation to break of 6% as measured by ASTM D4975-14.

The first bead portion 30 may be pre-formed and then applied onto the tire building drum. An optional apex may be positioned radially outward of the first bead portion 30.

The first bead portion is on the axially inner side of the ply layer 20 as shown in Fig. 1 and 2.

The tire further includes a second bead portion 40, that is located on the axially outer side of the ply layer 20.

The second bead portion 40 functions to clamp the ply layer with its ply ending 22 between the first and second bead portions 30, 40.

Preferably, the second bead portion 40 is a flexible bead portion formed of multifilament wire.

The second, axially outer bead portion 40 is formed by winding a strip of parallel reinforcement comprising two or more wires. The strip may be rubberized strip comprising said two or more wires. Preferably, the width of the strip is in a range of 1.1 to 2.5 times the sum or diameters of all adjacent wires in the strip. In case of a wire diameter of 1.3 mm and two wires in the strip, the strip width is hence in a range of from 1.1 × 2.6 mm to 2 x 2.6 mm. The thickness of the strip of said parallel reinforcement comprising two or more wires is preferably in a range of from 1.05 to 1.5 times the wire diameter. In case of a wire diameter of 1.3 mm, the strip thickness is hence in a range of from 1.05 x 1.3 mm to 1.5 x 1.3 mm.

The strip is preferably spirally wound directly onto the ply ending 22 during the tire building process, forming multiple layers that are stacked onto each other.

Preferably, the reinforcement wires of the strips in the second bead portion 40 may be wires with a diameter ranging from 1.0 to 1.8 mm.

Preferably, the diameter of wires of the strips in the second bead portion 40 are at least 0.2 mm larger than the diameter of the wires in the first bead portion 30.

Preferably, the second bead portion 40 comprises three, four (see Fig. 2) or five layers of strips stacked onto each other.

Preferably, the multiple stacked layers forming the second bead portion are all formed from the same strip as shown in Fig. 2. The second bead portion 40 may however also be formed of multiple stacked layers having a stepwise increasing or decreasing width when moving radially inwards.

Preferably, the wires of the strip forming the second bead portion 40 are multifilament steel cord reinforcements with a minimum elongation to break of 4% as measured by ASTM D2964-04.

## Claims

1. A tire comprising a tread (50), only a single carcass ply (20), a first bead portion (30) which is triangular shaped or at least substantially triangular shaped, and a second bead portion (40), wherein the radially inner portion or end (22) of the carcass ply (20) is secured between the first bead portion (30) and the second bead portion (40), wherein the second bead portion (40) comprises or is formed of multiple stacked strips each comprising two or more parallel reinforcements, **characterized in that** the carcass ply (20) has no ply turnup and **in that** the first bead portion (30) is on the axially inner side of the carcass ply (20) and the second bead portion (40) is on the axially outer side of the carcass ply (20).

2. The tire of claim 1 wherein the at least substantially triangular shaped bead portion (30) has at least two layers (42, 44, 45, 46) of reinforcement wires.

3. The tire of claim 2 wherein the at least substantially triangular shaped bead portion (30) has at least three layers of reinforcement wires.

4. The tire of claim 2 wherein the at least substantially triangular shaped bead portion (30) has a fourth layer of reinforcement wires.

5. The tire of at least one of the previous claims wherein the at least substantially triangular shaped bead portion (30) is formed of reinforcement wires having a diameter in the range of from 0.8 to 1.5 mm.

6. The tire of at least one of the previous claims wherein the at least substantially triangular shaped bead portion (30) is formed from bead wires with a minimum elongation to break of 6%, as measured by ASTM D4975-14.

7. The tire of at least one of the previous claims wherein the two or more parallel reinforcements are multifilament wires.

8. The tire of at least one of the previous claims wherein the two or more reinforcements have a diameter in the range of from 1.0 to 1.8 mm.

9. The tire at least one of the previous claims wherein the reinforcements of the strip are formed from multifilament steel cord reinforcement and/or have a minimum elongation to break of 4%, as measured by ASTM D2969-04.

10. A method of manufacturing a tire (10), the tire (10) comprising a tread (50), a carcass ply (20) that has no ply turnup, a first bead portion (30) which is triangular shaped or at least substantially triangular shaped, and a second bead portion (40), the radially inner portion or end (22) of the carcass ply (20) being secured between the first bead portion (30) and the second bead portion (40), the first bead portion (30) being on the axially inner side of the carcass ply (20) and the second bead portion (40) being on the axially outer side of the carcass ply (20), the second bead portion (40) being formed by spirally winding a strip onto the radially inner end of the carcass ply (20), the strip being formed of two or more parallel reinforcements.

11. The method of claim 10 wherein the second bead portion (40) is formed from at least two strip windings, preferably three of four strip windings.

## Patentansprüche

1. Reifen, der eine Lauffläche (50), nur eine einzige Karkassenlage (20), einen ersten Wulstabschnitt (30), der dreieckig oder zumindest im Wesentlichen dreieckig geformt ist, und einen zweiten Wulstabschnitt (40), umfasst, wobei der radial innere Abschnitt oder das Ende (22) der Karkassenlage (20) zwischen dem ersten Wulstabschnitt (30) und dem zweiten Wulstabschnitt (40) befestigt ist, wobei der zweite Wulstabschnitt (40) aus mehreren gestapelten jeweils zwei oder mehr parallelen Verstärkungen umfassenden Streifen besteht oder gebildet ist, **dadurch gekennzeichnet, dass** die Karkassenlage (20) keinen Lagenumschlag hat, und dadurch, dass der erste Wulstabschnitt (30) sich auf der axial inneren Seite der Karkassenlage (20) und der zweite Wulstabschnitt (40) sich auf der axial äußeren Seite der Karkassenlage (20) befinden.

2. Reifen nach Anspruch 1, wobei der zumindest im Wesentlichen dreieckige Wulstabschnitt (30) mindestens zwei Lagen (42, 44, 45, 46) von Verstärkungsdrähten aufweist.

3. Reifen nach Anspruch 2, wobei der mindestens im Wesentlichen dreieckige Wulstabschnitt (30) mindestens drei Lagen von Verstärkungsdrähten aufweist.

4. Reifen nach Anspruch 2, wobei der zumindest im Wesentlichen dreieckige Wulstabschnitt (30) eine vierte Lage von Verstärkungsdrähten hat.

5. Reifen nach mindestens einem der vorhergehenden Ansprüche, wobei der zumindest im Wesentlichen dreieckige Wulstabschnitt (30) aus Verstärkungsdrähten, die einen Durchmesser im Bereich von 0,8 bis 1,5 mm haben, gebildet ist.

6. Reifen nach mindestens einem der vorhergehenden Ansprüche, wobei der mindestens im Wesentlichen dreieckige Wulstabschnitt (30) aus Wulstdrähten, die eine minimale anhand ASTM D4975-14 gemessene Dehnung bis zum Bruch von 6% umfassen, gebildet ist.

7. Reifen nach mindestens einem der vorhergehenden Ansprüche, wobei die zwei oder mehr parallelen Verstärkungen Multifilamentdrähte sind.

8. Reifen nach mindestens einem der vorhergehenden Ansprüche, wobei die zwei oder mehr Verstärkungen einen Durchmesser im Bereich von 1,0 bis 1,8 mm haben.

9. Reifen nach mindestens einem der vorhergehenden Ansprüche, wobei die Verstärkungen des Streifens aus einer multifilamenten Stahlkordverstärkung gebildet sind und/oder eine minimale anhand ASTM D2969-04 gemessene Dehnung zum Bruch von 4% haben.

10. Verfahren zur Herstellung eines Reifens (10), wobei der Reifen (10) eine Lauffläche (50), eine Karkassenlage (20), die keine Lagenumlenkung hat, einen ersten Wulstabschnitt (30), der dreieckig oder zumindest im Wesentlichen dreieckig geformt ist, und einen zweiten Wulstabschnitt (40), wobei der radial innere Abschnitt oder Endabschnitt (22) der Karkassenlage (20) zwischen dem ersten Wulstabschnitt (30) und dem zweiten Wulstabschnitt (40) befestigt ist, wobei der erste Wulstabschnitt (30) sich auf der axialen Innenseite der Karkassenlage (20) und der zweite Wulstabschnitt (40) sich auf der axialen Außenseite der Karkassenlage (20) befinden, wobei der zweite Wulstabschnitt (40) durch spiralförmiges Aufwickeln eines Streifens auf das radial innere Ende der Karkassenlage (20) gebildet wird, wobei der Streifen aus zwei oder mehr parallelen Verstärkungen gebildet ist.

11. Verfahren nach Anspruch 10, wobei der zweite Wulstabschnitt (40) aus mindestens zwei Streifenwicklungen, vorzugsweise drei oder vier Streifenwicklungen, gebildet ist.

## Revendications

1. Bandage pneumatique qui comprend une bande de roulement (50), seulement une nappe de carcasse unique (20), une première portion (30) faisant office de talon qui possède une configuration de forme triangulaire ou qui possède une configuration de forme au moins essentiellement triangulaire, et une deuxième portion (40) faisant office de talon ; dans lequel la portion interne, en direction radiale, ou l'extrémité (22) de la nappe de carcasse (20) est fixée entre la première portion (30) faisant office de talon et la deuxième portion (40) faisant office de talon ; dans lequel la deuxième portion (40) faisant office de talon comprend plusieurs bandes empilées qui comprennent chacune deux renforcements parallèles ou plus ou est formée à partir desdites bandes ; **caractérisé en ce que** la nappe de carcasse (20) ne possède pas de retournement de nappe vers le haut et **en ce que** la première portion (30) faisant office de talon est disposée sur le côté interne, en direction axiale, de la nappe de carcasse (20), et la deuxième portion (40) faisant office de talon est disposée sur le côté externe, en direction axiale, de la nappe de carcasse (20).

2. Bandage pneumatique selon la revendication 1, dans lequel ladite portion (30) faisant office de talon, qui possède une configuration au moins essentiellement de forme triangulaire, possède au moins deux couches (42, 44, 45, 46) de fils métalliques de renforcement.

3. Bandage pneumatique selon la revendication 2, dans lequel ladite portion (30) faisant office de talon, qui possède une configuration au moins essentiellement de forme triangulaire, possède au moins trois couches de fils métalliques de renforcement.

4. Bandage pneumatique selon la revendication 2, dans lequel ladite portion (30) faisant office de talon, qui possède une configuration au moins essentiellement de forme triangulaire, possède une quatrième couche de fils métalliques de renforcement.

5. Bandage pneumatique selon au moins une des revendications précédentes, dans lequel ladite portion (30) faisant office de talon, qui possède une configuration au moins essentiellement de forme triangulaire, est réalisée à partir de fils métalliques de renforcement dont le diamètre se situe dans la plage allant de 0,8 à 1,5 mm.

6. Bandage pneumatique selon au moins une des revendications précédentes, dans lequel ladite portion (30) faisant office de talon, qui possède une configuration au moins essentiellement de forme triangulaire, est réalisée à partir de fils métalliques de talons qui possèdent un allongement minimum à la rupture qui s'élève à 6 %, tel qu'on le mesure par l'intermédiaire de la norme ASTM D4975-14.

7. Bandage pneumatique selon au moins une des revendications précédentes, dans lequel lesdits deux renforcements parallèles ou plus représentent des fils métalliques à multifilaments.

8. Bandage pneumatique selon au moins une des revendications précédentes, dans lequel lesdits deux renforcements ou plus possèdent un diamètre qui se situe dans la plage allant de 1,0 à 1,8 mm.

9. Bandage pneumatique selon au moins une des revendications précédentes, dans lequel les renforcements de la bande sont réalisés à partir d'un renforcement à multifilaments pour des câblés en acier et/ou possèdent un allongement minimum à la rupture qui s'élève à 4 %, tel qu'on le mesure par l'intermédiaire la norme ASTM D4975-14.

10. Procédé de confection d'un bandage pneumatique (10), le bandage pneumatique (10) comprenant une bande de roulement (50), une nappe de carcasse (20) qui ne possède pas de retournement de nappe vers le haut, une première portion (30) faisant office de talon qui possède une configuration de forme triangulaire ou qui possède une configuration au moins essentiellement triangulaire, et une deuxième portion (40) faisant office de talon ; la portion interne, en direction radiale, ou l'extrémité (22) de la nappe de carcasse (20) étant fixée entre la première portion (30) faisant office de talon et la deuxième portion (40) faisant office de talon ; la première portion (30) faisant office de talon étant disposée sur le côté interne, en direction axiale, de la nappe de carcasse (20), et la deuxième portion (40) faisant office de talon étant disposée sur le côté externe, en direction axiale, de la nappe de carcasse (20), la deuxième portion (40) faisant office de talon étant réalisée par l'intermédiaire d'un enroulement en spirale d'une bande sur l'extrémité interne, en direction radiale, de la nappe de carcasse (20), la bande étant réalisée à partir de deux renforcements parallèles ou plus.

11. Procédé selon la revendication 10, dans lequel la deuxième portion (40) faisant office de talon est réalisée à partir d'au moins deux enroulements de bandes, de préférence à partir de trois ou de quatre enroulements de bandes.
